# EUROPÄISCHE PATENTSCHRIFT

(11) **EP 2 802 964 B1**
(45) Veröffentlichungstag und Bekanntmachung des Hinweises auf die Patenterteilung: **17.04.2019**
(21) Anmeldenummer: 12810082.3
(22) Anmeldetag: 12.12.2012
(51) Int. Cl.: G06F 3/01, G06F 3/03, B60K 35/00, G02B 27/01, B60K 37/06

(54) **VERFAHREN UND VORRICHTUNG ZUM BEDIENEN VON FUNKTIONEN IN EINEM FAHRZEUG UNTER VERWENDUNG VON IM DREIDIMENSIONALEN RAUM AUSGEFÜHRTEN GESTEN SOWIE BETREFFENDES COMPUTERPROGRAMMPRODUKT**
METHOD AND DEVICE FOR THE CONTROL OF FUNCTIONS IN A VEHICLE USING GESTURES PERFORMED IN THREE-DIMENSIONAL SPACE, AND RELATED COMPUTER PROGRAM PRODUCT
PROCÉDÉ ET DISPOSITIF DE COMMANDE DE FONCTIONS DANS UN VÉHICULE À L'AIDE DE GESTES EFFECTUÉS DANS L'ESPACE TRIDIMENSIONNEL AINSI QUE PRODUIT PROGRAMME D'ORDINATEUR ASSOCIÉ

(30) Priorität: 10.01.2012 DE 102012000274
(43) Veröffentlichungstag der Anmeldung: 19.11.2014
(73) Patentinhaber: Daimler AG, 70327 Stuttgart (DE)
(72) Erfinder: CARTARIUS, Marco, 71093 Weil im Schönbuch (DE); EIDE, Wiebeke, 94040 Mountain View (US); FISCHER, Philipp, 94114 San Francisco (US); LORENZ, Christian, 94505 Discovery Bay (US); REIL, Georg, 1020 Wien (AT); SCHMIDT, Vera, 94304 Palo Alto (DE); SCHOELS, Erich, 70184 Stuttgart (DE); SINKWITZ, Hartmut, 71063 Sindelfingen (DE); STRAUB, Bernhard, 72181 Starzach (DE); ZEILINGER, Simon, 70563 Stuttgart (DE)
(74) Vertreter: JENSEN & SON
(86) Internationale Anmeldenummer: PCT/EP2012/005130
(87) Internationale Veröffentlichungsnummer: WO 2013/104392

(56) Entgegenhaltungen:
- EP-A1- 1 840 522
- DE-A1-102009 046 376
- US-A1- 2010 050 133

## Beschreibung

Die vorliegende Erfindung betrifft ein Verfahren und eine Vorrichtung zum Bedienen von Funktionen in einem Fahrzeug unter Verwendung von im dreidimensionalen Raum ausgeführten Gesten gemäß dem Oberbegriff der Ansprüche 1 und 6 sowie ein betreffendes Computerprogrammprodukt.

Aus der US 2008/0065291 A1 sind ein Verfahren und eine Vorrichtung zum Bedienen von Funktionen in einem Fahrzeug unter Verwendung von im dreidimensionalen Raum ausgeführten Gesten bekannt, bei denen bestimmt wird, ob eine im dreidimensionalen Raum durchgeführte Geste mittels eines bild-basierten Erfassungsvorgangs erfasst wird oder nicht, bestimmt wird, ob die erfasste Geste eine einem Steuern einer Funktion zugeordnete Geste ist oder nicht, und die Funktion gesteuert wird, falls bestimmt wird, dass die erfasste Geste die dem Steuern der Funktion zugeordnete Geste ist.

Aus der DE 10 2009 046 376 A1 sind ein Verfahren und eine Vorrichtung gemäß dem Oberbegriff der Ansprüche 1 und 6 bekannt.

Bezüglich weiteren Standes der Technik wird auf die US 2010/0050133 A1 verwiesen.

Aus der EP 1 840 522 A1 ist ein Navigationsgerät bekannt, bei dem ein Ermitteln einer Position eines Körperteils eines Nutzers zumindest relativ zu der Anzeigevorrichtung und ein Anpassen einer Darstellung von Navigationsinformationen in Abhängigkeit von der ermittelten Position des Körperteils erfolgt.

Es ist die Aufgabe der vorliegenden Erfindung, ein Verfahren, eine Vorrichtung und ein betreffendes Computerprogrammprodukt zu schaffen, die ein gesten-basiertes Bedienen in einem Fahrzeug zum Interagieren eines Nutzers mit einer realen Umgebung um das Fahrzeug auf eine einfache und zuverlässige Weise zulassen.

Diese Aufgabe wird mit den in den unabhängigen Ansprüchen angegebenen Maßnahmen gelöst.

Weitere vorteilhafte Ausgestaltungen der vorliegenden Erfindung sind Gegenstand der abhängigen Ansprüche.

Gemäß einem ersten Aspekt der Erfindung weist ein Verfahren zum Bedienen von Funktionen in einem Fahrzeug unter Verwendung von im dreidimensionalen Raum in dem Fahrzeug ausgeführten Gesten a) ein Bestimmen, ob eine im dreidimensionalen Raum durchgeführte erste Geste mittels eines bild-basierten Erfassungsvorgangs erfasst wird oder nicht, b) ein Bestimmen, ob die erste Geste eine Geste ist, die zu einem auf eine reale Umgebung um das Fahrzeug überlagerten virtuellen Objekt hin gerichtet ist oder nicht, falls bestimmt wird, dass die erste Geste erfasst worden ist, wobei das virtuelle Objekt mittels einer Einrichtung des Fahrzeugs zum Überlagern des virtuellen Objekts auf die reale Umgebung um das Fahrzeug angezeigt wird, c) ein Bestimmen, ob eine im dreidimensionalen Raum durchgeführte zweite Geste mittels des bild-basierten Erfassungsvorgangs erfasst wird oder nicht, falls bestimmt worden ist, dass die erfasste erste Geste die Geste ist, die zu dem auf die reale Umgebung um das Fahrzeug überlagerten virtuellen Objekt hin gerichtet ist, d) ein Bestimmen, ob die erfasste zweite Geste eine einem Manipulieren des virtuellen Objekts zugeordnete Geste ist oder nicht, falls bestimmt wird, dass die zweite Geste erfasst worden ist, und e) ein Manipulieren des virtuellen Objekts auf, falls bestimmt worden ist, dass die erfasste erste Geste die Geste ist, die zu dem auf die reale Umgebung um das Fahrzeug überlagerten virtuellen Objekt hin gerichtet ist, und falls bestimmt wird, dass die erfasste zweite Geste die dem Manipulieren des virtuellen Objekts zugeordnete Geste ist. Die zweite Geste ist dabei eine von dem der realen Umgebung um das Fahrzeug überlagerten virtuellen Objekt zu einer von der Einrichtung zum Überlagern des virtuellen Objekts auf die reale Umgebung verschiedenen Anzeigeeinheit des Fahrzeugs gerichtete Geste. Das Manipulieren des virtuellen Objekts weist dabei ein Darstellen des verschobenen oder kopierten virtuellen Objekts oder ein Darstellen von zusätzlichen oder detaillierten Informationen bezüglich einem dem virtuellen Objekt zugehörigen Objekt in der realen Umgebung auf der durch die zweite Geste bestimmten Anzeigeeinheit des Fahrzeugs auf. Gemäß einer weiteren Ausgestaltung wird das Überlagern des virtuellen Objekts auf die reale Umgebung um das Fahrzeug mittels einer Headup-Anzeige durchgeführt, wobei die Anzeigeeinheit zumindest ein Kombinationsinstrument oder eine zentrale Anzeigeeinheit umfasst.

Gemäß einer weiteren Ausgestaltung wird das Überlagern des virtuellen Objekts auf die reale Umgebung um das Fahrzeug mittels einer Projektion des virtuellen Objekts in die reale Umgebung um das Fahrzeug, wobei die Anzeigeeinheit zumindest ein Kombinationsinstrument oder eine zentrale Anzeigeeinheit umfasst.
Gemäß einer weiteren Ausgestaltung ist der bild-basierte Erfassungsvorgang kamera-basiert und wird eine Position eines eine Geste ausführenden Objekts im dreidimensionalen Raum erfasst.

Gemäß einem zweiten Aspekt der Erfindung weist eine Vorrichtung zum Bedienen von Funktionen in einem Fahrzeug unter Verwendung von im dreidimensionalen Raum in dem Fahrzeug ausgeführten Gesten Einrichtungen auf, die dazu ausgelegt sind, das zuvor beschriebene Verfahren oder dessen Ausgestaltungen auszuführen, umfassend
- eine bild-basierte Erfassungseinrichtung zum Erfassen der im dreidimensionalen Raum ausgeführten Gesten,
- eine Einrichtung zum Überlagern eines virtuellen Objekts auf eine reale Umgebung um das Fahrzeug und damit Anzeigen des virtuellen Objekts,
- eine von der Einrichtung zum Überlagern des virtuellen Objekts auf die reale Umgebung verschiedene Anzeigeeinheit zum Darstellen von Informationen und
- eine Recheneinheit, die mittels geeigneter Computerprogramm-Instruktionen dazu ausgelegt ist, ein Verfahren nach einem der Ansprüche 1 bis 4 auszuführen.

Gemäß einem dritten Aspekt der Erfindung umfasst ein Computerprogrammprodukt Computerprogramm-Instruktionen, die bewirken, dass die obige Vorrichtung das zuvor beschriebene Verfahren oder dessen Ausgestaltungen ausführt.

Gemäß den ersten bis dritten Aspekten und deren Ausgestaltungen kann ein Nutzer anhand von auf die reale Umgebung um das Fahrzeug überlagerten virtuellen Objekten Informationen von relevanten virtuellen Objekten mittels Gestensteuerung auf der Anzeigeeinheit des Fahrzeugs anzeigen und auf die Weise mit der realen Umgebung um das Fahrzeug interagieren.

Die vorliegende Erfindung wird nachstehend anhand eines Ausführungsbeispiels unter Bezugnahme auf die beiliegende Zeichnung näher erläutert.

In der Zeichnung zeigt:
Fig. 1 eine schematische Darstellung eines grundlegenden Aufbaus einer Anzeigeeinheit und eines Erfassungskonzepts gemäß einem Ausführungsbeispiel der vorliegenden Erfindung;
Fig. 2 eine weitere schematische Darstellung des grundlegenden Aufbaus der Anzeigeeinheit und des Erfassungskonzepts gemäß dem Ausführungsbeispiel der vorliegenden Erfindung;
Fig. 3 eine schematische Darstellung des grundlegenden Aufbaus der Anzeigeeinheit und eines Einbauorts einer Erfassungseinrichtung in einer Dachbedieneinheit gemäß dem Ausführungsbeispiel der vorliegenden Erfindung;
Fig. 4 eine schematische Darstellung des grundlegenden Aufbaus der Anzeigeeinheit und eines Einbauorts einer Erfassungseinrichtung in einem Innenspiegel gemäß dem Ausführungsbeispiel der vorliegenden Erfindung;
Fig. 5 eine schematische Darstellung einer realen Umgebung um das Fahrzeug mit virtuellen überlagerten Objekten gemäß dem Ausführungsbeispiel der vorliegenden Erfindung; und
Fig. 6 ein Flussdiagramm eines Verfahrens zum Bedienen von Funktionen in einem Fahrzeug unter Verwendung von im dreidimensionalen Raum ausgeführten Gesten gemäß dem Ausführungsbeispiel der vorliegenden Erfindung.

Nachstehend erfolgt die Beschreibung eines Ausführungsbeispiels der vorliegenden Erfindung.

Es ist anzumerken, dass im weiteren Verlauf davon ausgegangen wird, dass eine Anzeigeeinheit eine vorzugsweise zentrale Anzeige oder ein Kombinationsinstrument eines Fahrzeugs, vorzugsweise eines Kraftfahrzeugs, ist und ein Verfahren zum Bedienen von auf der Anzeigeeinheit dargestellten Funktionen unter Verwendung von im dreidimensionalen Raum ausgeführten Gesten in dem Fahrzeug durchgeführt wird.

Weiterhin ist eine im weiteren Verlauf beschriebene Geste eine Geste, die durch einen Nutzer des Fahrzeugs mittels einer Hand oder eines Fingers des Nutzers im dreidimensionalen Raum durchgeführt wird, ohne eine Anzeige, wie zum Beispiel einen Touchscreen, oder ein Bedienelement, wie zum Beispiel einen Touchpad, zu berühren.

Die nachstehend beschriebene bild-basierte Erfassungseinrichtung kann jede zweckmäßige Kamera sein, die imstande ist, eine Geste im dreidimensionalen Raum zu erfassen, wie zum Beispiel eine Tiefenkamera, eine Kamera mit strukturiertem Licht, eine Stereokamera, eine Kamera basierend auf der Time-of-Flight-Technologie oder eine Infrarot-Kamera kombiniert mit einer Mono-Kamera. Eine Mehrzahl von beliebigen Kombinationen von derartigen Kameras ist möglich. Eine Infrarot-Kamera kombiniert mit einer Mono-Kamera verbessert ein Erfassungsvermögen, da eine Mono-Kamera mit einer hohen Bildauflösung zusätzlich eine Intensitätsinformation liefert, was Vorteile bei einer Hintergrundsegmentierung bietet, und eine Mono-Kamera unempfindlich gegenüber Fremdlicht ist.

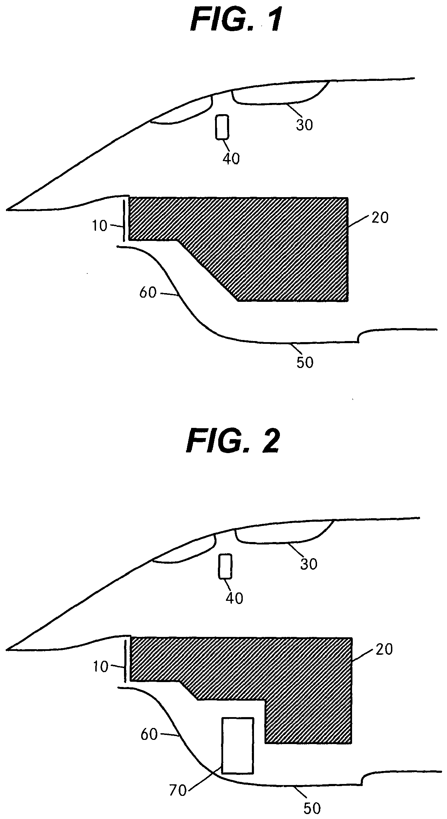

Fig. 1 zeigt eine schematische Darstellung eines grundlegenden Aufbaus einer Anzeigeeinheit und eines Erfassungskonzepts gemäß einem Ausführungsbeispiel der vorliegenden Erfindung.

In Fig. 1 bezeichnet das Bezugszeichen 10 eine Anzeigeeinheit eines Fahrzeugs, bezeichnet das Bezugszeichen 20 einen gültigen Erfassungsbereich einer bild-basierten Erfassungseinrichtung, bezeichnet das Bezugszeichen 30 eine Dachbedieneinheit des Fahrzeugs, bezeichnet das Bezugszeichen 40 einen Innenspiegel des Fahrzeugs, bezeichnet das Bezugszeichen 50 eine Mittelkonsole des Fahrzeugs und bezeichnet das Bezugszeichen 60 einen Dom des Fahrzeugs.

Das grundlegende Bedienkonzept ist, dass eine Gestensteuerung zum Bedienen von Funktionen mittels einer durch eine Hand oder eines Fingers eines Nutzers durchgeführten Geste in dem gültigen Erfassungsbereich 20 im dreidimensionalen Raum durchgeführt wird, falls die durchgeführte Geste in dem Erfassungsbereich 20 mittels der bild-basierten Erfassungseinrichtung als eine vorbestimmte Geste erfasst wird.

Der gültige Erfassungsbereich 20 wird durch eine bild-basierte Erfassungseinrichtung festgelegt, die imstande ist, eine dreidimensionale Position der Hand oder des Fingers des Nutzers im dreidimensionalen Raum zu erfassen. Bevorzugt ist die bild-basierte Erfassungseinrichtung eine in das Fahrzeug integrierte Tiefenkamera.

Die bild-basierte Erfassungseinrichtung muss derart integriert sein, dass eine Gestensteuerung durch eine entspannte Hand- und/oder Armhaltung des Nutzers an einer beliebigen Position in dem Bereich über dem Dom 60 und der Mittelkonsole 50 des Fahrzeugs zugelassen wird. Daher kann ein gültiger Erfassungsbereich nach oben von einer Oberkante der Anzeigeeinheit 10 und nach unten durch einen Mindestabstand zu dem Dom 60 und der Mittelkonsole 50 begrenzt sein.

Aktiviert wird eine Gestensteuerung, falls eine erste Geste in dem gültigen Erfassungsbereich 20 erfasst wird, die eine erste vorbestimmte Geste ist. Die erste vorbestimmte Geste ist eine statische Geste, die durch Bewegen der Hand oder des Fingers des Nutzers in den gültigen Erfassungsbereich 20 und anschließendes kurzzeitiges Verharren der Hand oder des Fingers des Nutzers für eine erste vorbestimmte Zeitdauer in dem gültigen Erfassungsbereich 20 durchgeführt wird.

Deaktiviert wird die Gestensteuerung durch Herausführen der Hand oder des Fingers des Nutzers aus dem gültigen Erfassungsbereich. Ein Ablegen der Hand oder des Arms des Nutzers auf der Mittelkonsole 20 und ein Bedienen von Komponenten des Fahrzeugs wird unter dem gültigen Erfassungsbereich 20 durchgeführt, wodurch keine Gestensteuerung aktiviert wird.

Bei einem Gestikulieren in dem Fahrzeug und bei einem Hindurchführen der Hand oder des Fingers des Nutzers zu einem Bedienelement wird keine statische Geste durchgeführt, wodurch keine Gestensteuerung aktiviert wird.

Fig. 2 zeigt eine weitere schematische Darstellung des grundlegenden Aufbaus der Anzeigeeinheit und des Erfassungskonzepts gemäß dem Ausführungsbeispiel der vorliegenden Erfindung.

In Fig. 2 bezeichnen die gleichen Bezugszeichen wie in Fig. 1 die gleichen Elemente und bezeichnet das Bezugszeichen 70 einen in oder auf der Mittelkonsole 50 vorhandenen Gegenstand als ein Störobjekt, wie zum Beispiel einen Getränkebehälter in einem Getränkehalter.

Die zuvor bezüglich Fig. 1 gemachten Ausführungen gelten ebenso für Fig. 2.

Eine untere Grenze des gültigen Erfassungsbereichs 20 wird dynamisch an den Gegenstand 70 angepasst. Ein derart kontext-abhängiges Adaptieren des gültigen Erfassungsbereichs als ein Interaktionsbereich wird derart durchgeführt, dass eine Tiefenkontur des gültigen Erfassungsbereichs mittels einer Tiefeninformation der bild-basierten Erfassungseinrichtung, wie zum Beispiel der Tiefenkamera, in Echtzeit bei einem Erfassen einer Geste durchgeführt wird. Die bedeutet, dass eine gültige Geste über dem Gegenstand 70 durchgeführt werden muss.

Eine Anordnen der bild-basierten Erfassungseinrichtung in einem Dachbereich des Fahrzeugs führt zu den folgenden Vorteilen: Es wird kein Sonnenlicht in eine Optik der bild-basierten Erfassungseinrichtung eingestrahlt. Es wird ein vollständiger Erfassungsbereich auch in einem Nahbereich der Anzeigeeinheit 10 als ein gültiger Erfassungsbereich 20 abgedeckt. Es gibt eine hohe Bildauflösung in Hauptinteraktionsrichtungen links, rechts, vor und zurück der Gestensteuerung. Die bild-basierte Erfassungseinrichtung ist aus einem normalen Sichtbereich von Fahrer und Beifahrer. Dachkomponenten können über verschiedene Baureihen hinweg mit weniger Designvarianten stark standardisiert werden. Es sind geringe Anforderungen an eine Erfassungsreichweite erforderlich.

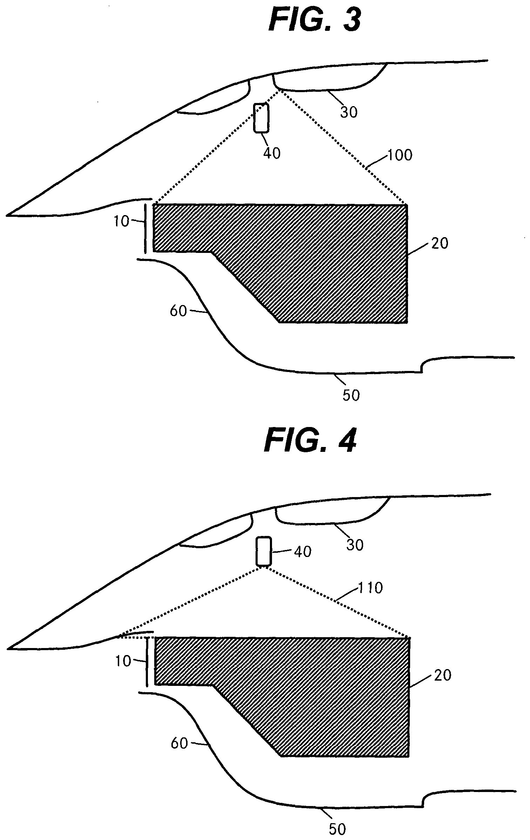

Unter Bezugnahme auf Fig. 3 und Fig. 4 werden zwei mögliche Einbauorte für die bild-basierte Erfassungseinrichtung in dem Dachbereich des Fahrzeugs erläutert.

Fig. 3 zeigt eine schematische Darstellung des grundlegenden Aufbaus der Anzeigeeinheit und eines Einbauorts der Erfassungseinrichtung in der Dachbedieneinheit gemäß dem Ausführungsbeispiel der vorliegenden Erfindung gemäß dem Ausführungsbeispiel der vorliegenden Erfindung.

In Fig. 3 bezeichnen die gleichen Bezugszeichen wie in Fig. 1 und Fig. 2 die gleichen Elemente und bezeichnet das Bezugszeichen 100 einen maximalen Erfassungswinkel einer in der Dachbedieneinheit 30 des Fahrzeugs integrierten bild-basierten Erfassungseinrichtung.

Die zuvor bezüglich Fig. 1 und Fig. 2 gemachten Ausführungen gelten ebenso für Fig. 3.

Wie es in Fig. 3 ersichtlich ist, wird mit der in der Dachbedieneinheit 30 integrierten bild-basierten Erfassungseinrichtung der vollständige gültige Erfassungsbereich 20 abgedeckt. Ein weiterer Vorteil der in der Dachbedieneinheit 30 integrierten bild-basierten Erfassungseinrichtung ist, dass ein größtmöglicher vertikaler Abstand zu dem gültigen Erfassungsbereich 20 erzielt wird.

Fig. 4 zeigt eine schematische Darstellung des grundlegenden Aufbaus der Anzeigeeinheit und eines Einbauorts einer Erfassungseinrichtung in einem Innenspiegel gemäß dem Ausführungsbeispiel der vorliegenden Erfindung.

In Fig. 4 bezeichnen die gleichen Bezugszeichen wie in Fig. 1 und Fig. 2 die gleichen Elemente und bezeichnet das Bezugszeichen 110 einen maximalen Erfassungswinkel einer in dem Innenspiegel 40 des Fahrzeugs integrierten bild-basierten Erfassungseinrichtung.

Die zuvor bezüglich Fig. 1 und Fig. 2 gemachten Ausführungen gelten ebenso für Fig. 4.

Wie es in Fig. 4 ersichtlich ist, wird mit der in der Dachbedieneinheit 30 integrierten bild-basierten Erfassungseinrichtung der vollständige gültige Erfassungsbereich 20 abgedeckt. Um eine sich ändernde Ausrichtung der bild-basierten Erfassungseinrichtung aufgrund eines Verstellens des Innenspiegels 40 zu kompensieren, wird anhand einer Kontur der Mittelkonsole 50 ein Ausrichtungsversatz der bild-basierten Erfassungseinrichtung korrigiert, um eine Positionskalibrierung durchzuführen.

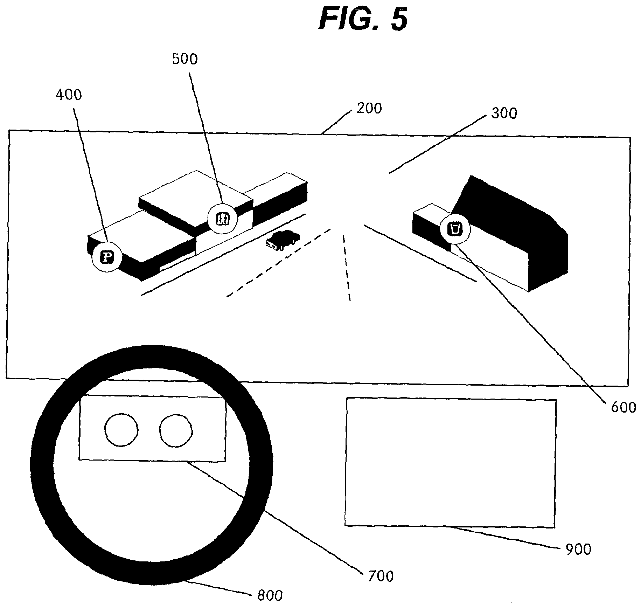

Fig. 5 zeigt eine schematische Darstellung einer realen Umgebung um das Fahrzeug mit virtuellen überlagerten Objekten gemäß dem Ausführungsbeispiel der vorliegenden Erfindung.

In Fig. 5 bezeichnet das Bezugszeichen 200 eine Windschutzscheibe eines Fahrzeugs, bezeichnet das Bezugszeichen 300 eine reale Umgebung um das Fahrzeug, bezeichnet das Bezugszeichen 400 ein erstes virtuelles Objekt, bezeichnet das Bezugszeichen 500 ein zweites virtuelles Objekt, bezeichnet das Bezugszeichen 600 ein drittes virtuelles Objekt, bezeichnet das Bezugszeichen 700 ein Kombinationsinstrument, bezeichnet das Bezugszeichen 800 ein Lenkrad und bezeichnet das Bezugszeichen 900 eine zentrale Anzeigeeinheit.

Auf eine reale Umgebung um das Fahrzeug, wie zum Beispiel der durch die Windschutzscheibe 200 sichtbaren realen Umgebung 300 vor dem Fahrzeug, wie sie schematisch mittels Gebäuden, einer Straße und einem vorausfahrenden Fahrzeug in Fig. 5 angedeutet ist, werden virtuelle Objekte überlagert, die eine Beziehung zu einem in der realen Umgebung 300 vorhandenen Objekt aufweisen, das sich an dieser Position befindet. Zum Beispiel kann das virtuelle Objekt das einem Parkplatz zugeordnete erste virtuelle Objekt 400 sein, das an einer Position auf die reale Umgebung 300 überlagert ist, an der der dem virtuellen Objekt 400 zugeordnete Parkplatz in der realen Umgebung vorhanden ist, kann das virtuelle Objekt das einer öffentlichen Toilette zugeordnete zweite virtuelle Objekt 500 sein, das an einer Position auf die reale Umgebung 300 überlagert ist, an der die dem virtuellen Objekt 500 zugeordnete öffentliche Toilette in der realen Umgebung 300 vorhanden ist, und/oder kann das virtuelle Objekt das einem Restaurant zugeordnete dritte virtuelle Objekt 400 sein, das an einer Position auf die reale Umgebung 300 überlagert ist, an der das dem virtuellen Objekt zugeordnete Restaurant in der realen Umgebung 300 vorhanden ist. beliebige weitere und/oder andere Arten von Objekten und virtuellen Objekten sind ebenso möglich.

Ein Überlagern der virtuellen Objekte auf die reale Umgebung 300 kann zum Beispiel mittels eines Anzeigens der virtuellen Objekte auf einer sogenannten Headup-Anzeige auf der Windschutzscheibe 200 des Fahrzeugs durchgeführt werden. Eine weitere Möglichkeit des Durchführens des Überlagerns der virtuellen Objekte auf die reale Umgebung 300 kann zum Beispiel mittels eines Projizierens der virtuellen Objekte in die reale Umgebung 300 mittels einer geeigneten Projektionsvorrichtung realisiert werden. Die Zuordnung von virtuellen Objekten zu in der realen Umgebung 300 vorhandenen Objekten wird zum Beispiel auf der Grundlage von Positionskoordinaten, wie zum Beispiel GPS-Koordinaten, die mittels eines Navigationssystems in dem Fahrzeug erzielt werden, und/oder einer Objekterkennung von in der realen Umgebung 300 vorhandenen Objekten durchgeführt.

Den auf die reale Umgebung 300 überlagerten Objekten sind Informationen zugehörig, die zusätzliche oder detaillierte Informationen bezüglich der den virtuellen Objekten zugehörigen Objekte in der realen Umgebung 300 aufweisen. Zum Beispiel kann eine dem ersten virtuellen Objekt 400 zugehörige Information einen Preis für den in der realen Umgebung 300 vorhandenen Parkplatz aufweisen oder kann eine dem dritten virtuellen Objekt 600 zugehörige Information eine Speisekarte für das in der realen Umgebung 300 vorhandene Restaurant aufweisen.

Mittels einer Geste durch einen Nutzer, die auf ein virtuelles Objekt gerichtet ist, kann das virtuelle Objekt markiert bzw. ausgewählt werden und mittels einer weiteren Geste, die einer dynamischen Geste bzw. einer Wischbewegung zu dem Kombinationsinstrument 700, das sich hinter dem Lenkrad 800 befindet, oder der zentralen Anzeigeeinheit 900 kann das virtuelle Objekt zu dem Kombinationsinstrument 700 oder der zentralen Anzeigeeinheit 900 verschoben oder kopiert werden und kann eine dem virtuellen Objekt zugehörige Information auf dem Kombinationsinstrument 700 oder der zentralen Anzeigeeinheit 900 dargestellt werden.

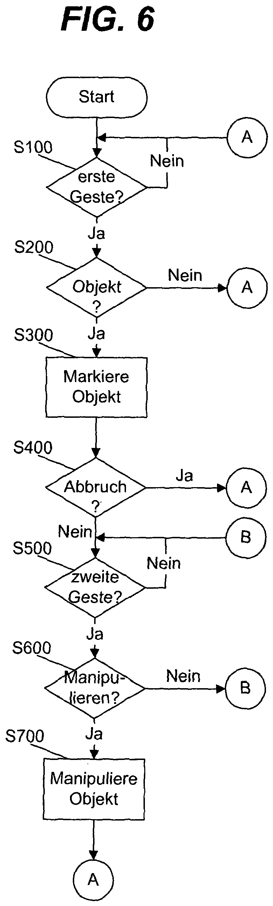

Fig. 6 zeigt ein Flussdiagramm eines Verfahrens zum Bedienen von Funktionen in einem Fahrzeug unter Verwendung von im dreidimensionalen Raum ausgeführten Gesten gemäß dem Ausführungsbeispiel der vorliegenden Erfindung.

Es ist anzumerken, dass ein Verarbeitungsfluss des Flussdiagramms in Fig. 6 zum Beispiel nach einem Initialisierungszeitpunkt, wie zum Beispiel nach einem Einschalten einer Zündung des Fahrzeugs, eingeschaltet wird und zyklisch wiederholt durchgeführt wird, bis ein Beendigungszeitpunkt, wie zum Beispiel ein Ausschalten der Zündung des Fahrzeugs, erreicht ist. Alternativ kann der Initialisierungszeitpunkt zum Beispiel der Zeitpunkt des Startens eines Motors des Fahrzeugs und/oder der Beendigungszeitpunkt der Zeitpunkt des Abstellens des Motors des Fahrzeugs sein. Andere Initialisierungszeitpunkte und Beendigungszeitpunkte sind je nach vorliegendem Anwendungszweck ebenso möglich.

Es kann ein Unterscheiden durchgeführt werden, ob eine Geste von einem Fahrer oder einem Beifahrer durchgeführt wird, was insbesondere bei einem sogenannten SplitView-Display vorteilhaft ist, das imstande ist, gleichzeitig unterschiedliche Informationen für den Fahrer und den Beifahrer anzuzeigen. Ebenso ist das Unterscheiden, ob eine Geste von einem Fahrer oder einem Beifahrer durchgeführt wird, im Hinblick auf ein ergonomisches Bedienen durch den Fahrer oder den Beifahrer vorteilhaft.

Im weiteren Verlauf wird davon ausgegangen, dass die erfasste Geste sowohl eine von dem Fahrer ausgeführte Geste als auch eine von dem Beifahrer ausgeführte Geste sein kann.

Weiterhin ist anzumerken, dass in dem Fall des zuvor beschriebenen Unterscheidens zwischen einer Geste des Fahrers und des Beifahrers das Verfahren des Flussdiagramms in Fig. 6 sowohl für die Fahrer- als auch die Beifahrerseite durchgeführt wird. Der in Fig. 6 gezeigte Verarbeitungsablauf kann zweckmäßig zum Beispiel parallel, seriell oder auf eine verschachtelte Weise für Fahrer- und Beifahrerseite durchgeführt werden.

In Schritt S100 wird bestimmt, ob eine erste Geste erfasst wird oder nicht. Falls die erste Geste nicht erfasst wird, was einer Antwort "Nein" in Schritt S100 entspricht, kehrt der Verarbeitungsablauf zu Schritt 100 zurück. Falls die erste Geste erfasst wird, was einer Antwort "Ja" in Schritt S100 entspricht, schreitet der Verarbeitungsablauf zu Schritt S200 fort.

In Schritt S200 wird bestimmt, ob die erfasste erste Geste eine Geste ist, die zu einem auf die reale Umgebung um das Fahrzeug überlagerten virtuellen Objekt hin gerichtet ist oder nicht. Falls die erste Geste keine Geste ist, die zu dem auf die reale Umgebung um das Fahrzeug überlagerten virtuellen Objekt hin gerichtet ist, was einer Antwort "Nein" in Schritt S200 entspricht, kehrt der Verarbeitungsablauf zu Schritt S100 zurück. Falls die erste Geste die Geste ist, die zu dem auf die reale Umgebung um das Fahrzeug überlagerten virtuellen Objekt hin gerichtet ist, was einer Antwort "Ja" in Schritt S200 entspricht, schreitet der Verarbeitungsablauf zu Schritt S300 fort.

Die Geste, die zu dem auf die reale Umgebung um das Fahrzeug überlagerten virtuellen Objekt hin gerichtet ist, ist zum Beispiel eine erste vorbestimmte Geste, die für eine erste vorbestimmte Zeitdauer in einem Interaktionsbereich des dreidimensionalen Raums statisch auf das virtuelle Objekt hin gerichtet ist. Die erste vorbestimmte Geste wird erfasst, wie es zuvor unter Bezugnahme auf die Figuren 1 bis 5 beschrieben worden ist. Der Interaktionsbereich entspricht dem zuvor beschriebenen gültigen Erfassungsbereich.

In Schritt S300 wird das virtuelle Objekt markiert bzw. ausgewählt. Nach Schritt S300 schreitet der Verarbeitungsablauf zu Schritt S400 fort.

In Schritt S400 wird bestimmt, ob eine vorbestimmte Abbruchbedingung erfüllt ist oder nicht. Falls die vorbestimmte Abbruchbedingung erfüllt ist, was einer Antwort "Ja" in Schritt S400 entspricht, kehrt der Verarbeitungsablauf zu Schritt S100 zurück. Falls die Abbruchbedingung nicht erfüllt ist, was einer Antwort "Nein" in Schritt S400 entspricht, schreitet der Verarbeitungsablauf zu Schritt S500 fort.

Die vorbestimmte Abbruchbedingung kann zum Beispiel sein, dass für eine vierte vorbestimmte Zeitdauer keine Geste erfasst worden ist.

In Schritt S500 wird bestimmt, ob eine zweite Geste erfasst wird oder nicht. Falls die zweite Geste nicht erfasst wird, was einer Antwort "Nein" in Schritt S500 entspricht, kehrt der Verarbeitungsablauf zu Schritt S500 zurück. Falls die zweite Geste erfasst wird, was einer Antwort "Ja" in Schritt S500 entspricht, schreitet der Verarbeitungsablauf zu Schritt S600 fort.

In Schritt S600 wird bestimmt, ob die erfasste zweite Geste eine einem Manipulieren des virtuellen Objekts zugeordnete Geste ist oder nicht. Falls die zweite Geste keine dem manipulieren des virtuellen Objekts zugeordnete Geste ist, was einer Antwort "Nein" in Schritt S600 entspricht, kehrt der Verarbeitungsablauf zu Schritt S500 zurück. Falls die zweite Geste die Manipulieren des virtuellen Objekts zugeordnete Geste ist, was einer Antwort "Ja" in Schritt S600 entspricht, schreitet der Verarbeitungsablauf zu Schritt S700 fort.

Die dem Manipulieren des virtuellen Objekts zugeordnete Geste ist eine zweite vorbestimmte Geste, die in dem Interaktionsbereich des dreidimensionalen Raums dynamisch ist und von dem der realen Umgebung überlagerten markierten bzw. ausgewählten virtuellen Objekt zu einer Anzeigeeinheit, wie zum Beispiel dem Kombinationsinstrument 700 oder der zentralen Anzeigeeinheit 900 hin gerichtet ist.

In Schritt S700 wird das virtuelle Objekt manipuliert, wie zum Beispiel auf die Anzeigeeinheit verschoben oder kopiert oder es wird eine dem markierten bzw. ausgewählten Objekt zugehörige Information auf der Anzeigeeinheit angezeigt. Nach Schritt S700 kehrt der Verarbeitungsablauf zu Schritt S700 zurück.

Das zuvor beschriebene Verfahren kann mittels Einrichtungen realisiert werden, die eine Vorrichtung zum Bedienen von Funktionen in einem Fahrzeug ausbilden. Eine Anzeigeeinheit ist vorzugsweise eine zentrale Anzeige des Fahrzeugs, vorzugsweise eines Kraftfahrzeugs.

Obgleich in den Figuren 3 und 4 spezifische Einbauorte für jeweilige Kameras gezeigt sind, können jeweilige Kameras an anderen zweckmäßigen Einbauorten angeordnet sein.

Durch die zuvor beschriebene bild-basierte Gestenbedienung wird eine einfache und schnelle Bedienbarkeit realisiert, die einen Bedienkomfort, eine Bedienflexibilität und ein Bedienerlebnis für den Nutzer steigert, Gestaltungsfreiheiten für ein Fahrzeug-Interieur maßgeblich steigert und eine Interaktion eines Nutzers mit der realen Umgebung zulässt.

Das zuvor beschriebene Ausführungsbeispiel ist als Computerprogrammprodukt, wie zum Beispiel ein Speichermedium, realisierbar, das dazu ausgelegt ist, im Zusammenwirken mit einem Computer oder mehreren Computern, das heißt Computersystemen, oder sonstigen Recheneinheiten ein Verfahren gemäß dem vorhergehenden Ausführungsbeispiel auszuführen. Das Computerprogrammprodukt kann dazu ausgelegt sein, dass das Verfahren erst nach Durchführen einer vorbestimmten Routine, wie zum Beispiel einer Setup-Routine, ausgeführt wird.

Obgleich die vorliegende Erfindung vorhergehend anhand eines Ausführungsbeispiels beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Zeichnung verweisen.

## Patentansprüche

1. Verfahren zum Bedienen von Funktionen in einem Fahrzeug unter Verwendung von im dreidimensionalen Raum in dem Fahrzeug ausgeführten Gesten, das aufweist:
**a)** Bestimmen (S100), ob eine im dreidimensionalen Raum durchgeführte erste Geste mittels eines bild-basierten Erfassungsvorgangs erfasst wird oder nicht;
**b)** Bestimmen(S200), ob die erste Geste eine Geste ist, die zu einem auf eine reale Umgebung (300) um das Fahrzeug überlagerten virtuellen Objekt (400, 500, 600) hin gerichtet ist oder nicht,
falls bestimmt wird, dass die erste Geste erfasst worden ist, wobei das virtuelle Objekt (400, 500, 600) mittels einer Einrichtung des Fahrzeugs zum Überlagern des virtuellen Objekts auf die reale Umgebung (300) um das Fahrzeug angezeigt wird;
**c)** Bestimmen (S500), ob eine im dreidimensionalen Raum durchgeführte zweite Geste mittels des bild-basierten Erfassungsvorgangs erfasst wird oder nicht, falls bestimmt worden ist, dass die erfasste erste Geste die Geste ist, die zu dem auf die reale Umgebung (300) um das Fahrzeug überlagerten virtuellen Objekt (400, 500, 600) hin gerichtet ist;
**d)** Bestimmen (S600), ob die erfasste zweite Geste eine einem Manipulieren des virtuellen Objekts (400, 500, 600) zugeordnete Geste ist oder nicht, falls bestimmt wird, dass die zweite Geste erfasst worden ist; und
**e)** Manipulieren (S700) des virtuellen Objekts (400, 500, 600), falls bestimmt worden ist, dass die erfasste erste Geste die Geste ist, die zu dem auf die reale Umgebung (300) um das Fahrzeug überlagerten virtuellen Objekt (400, 500, 600) hin gerichtet ist, und falls bestimmt wird, dass die erfasste zweite Geste die dem Manipulieren des virtuellen Objekts zugeordnete Geste ist,
**dadurch gekennzeichnet, dass**
die zweite Geste eine von dem der realen Umgebung um das Fahrzeug überlagerten virtuellen Objekt zu einer von der Einrichtung zum Überlagern des virtuellen Objekts (400, 500, 600) auf die reale Umgebung (300) verschiedenen Anzeigeeinheit (700, 900) des Fahrzeugs gerichtete Geste ist, und das Manipulieren (S700) des virtuellen Objekts (400, 500, 600) ein Darstellen eines verschobenen oder kopierten virtuellen Objekts oder ein Darstellen von zusätzlichen oder detaillierten Informationen bezüglich einem dem virtuellen Objekt (400, 500, 600) zugehörigen Objekt in der realen Umgebung auf der durch die zweite Geste bestimmten Anzeigeeinheit (700, 900) des Fahrzeugs aufweist.

2. Verfahren nach Anspruch 1, **dadurch gekennzeichnet,**
**dass** das Überlagern des virtuellen Objekts auf die reale Umgebung um das Fahrzeug mittels einer Headup-Anzeige durchgeführt wird und die Anzeigeeinheit zumindest ein Kombinationsinstrument oder eine zentrale Anzeigeeinheit umfasst.

3. Verfahren nach Anspruch 1 oder 2, **dadurch gekennzeichnet, dass** das Überlagern des virtuellen Objekts auf die reale Umgebung um das Fahrzeug mittels einer Projektion des virtuellen Objekts in die reale Umgebung um das Fahrzeug durchgeführt wird und die Anzeigeeinheit zumindest ein Kombinationsinstrument oder eine zentrale Anzeigeeinheit umfasst.

4. Verfahren nach einem der Ansprüche 1 bis 3, **dadurch gekennzeichnet, dass** das virtuelle Objekt an einer Position, die dem in der realen Umgebung vorhandenen Objekt entspricht, das dem virtuellen Objekt zugeordnet ist, auf die reale Umgebung um das Fahrzeug überlagert ist.

5. Verfahren nach einem der Ansprüche 1 bis 4, **dadurch gekennzeichnet, dass** der bild-basierte Erfassungsvorgang kamera-basiert ist und eine Position eines eine Geste ausführenden Objekts im dreidimensionalen Raum erfasst.

6. Vorrichtung zum Bedienen von Funktionen in einem Fahrzeug unter Verwendung von im dreidimensionalen Raum in dem Fahrzeug ausgeführten Gesten, die Einrichtungen aufweist, die dazu ausgelegt sind, ein Verfahren nach einem der Ansprüche 1 bis 5 auszuführen, umfassend:
- eine bild-basierte Erfassungseinrichtung zum Erfassen der im dreidimensionalen Raum ausgeführten Gesten;
- eine Einrichtung zum Überlagern eines virtuellen Objekts (400, 500, 600) auf eine reale Umgebung (300) um das Fahrzeug, und damit Anzeigen des virtuellen Objekts (400, 500, 600);
- eine von der Einrichtung zum Überlagern des virtuellen Objekts (400, 500, 600) auf die reale Umgebung (300) verschiedene Anzeigeeinheit (700, 900) zum Darstellen von Informationen; und
- eine Recheneinheit, die mittels geeigneter Computerprogramm-Instruktionen zur Ausführung des Verfahrens eingerichtet ist.

7. Computerprogrammprodukt, umfassend Computerprogramm-Instruktionen, die bewirken, dass eine Vorrichtung nach Anspruch 6 ein Verfahren nach einem der Ansprüche 1 bis 5 ausführt.

## Claims

1. Method for controlling functions in a vehicle using gestures performed in three-dimensional space in the vehicle, the method comprising:
a) determining (S100) whether or not a first gesture performed in three-dimensional space is detected by means of an image-based detection process;
b) determining (S200) whether or not the first gesture is a gesture directed towards a virtual object (400, 500, 600) which is superimposed on a real environment (300) of the vehicle, if it is determined that the first gesture has been detected, wherein the virtual object (400, 500, 600) is displayed by means of a device of the vehicle for superimposing the virtual object on the real environment (300) of the vehicle;
c) determining (S500) whether or not a second gesture performed in three-dimensional space is detected by means of the image-based detection process if it has been determined that the detected first gesture is the gesture which is directed towards the virtual object (400, 500, 600) which is superimposed on the real environment (300) of the vehicle;
d) determining (S600) whether or not the detected second gesture is a gesture assigned to a manipulation of the virtual object (400, 500, 600) if it is determined that the second gesture has been detected; and
e) manipulating (S700) the virtual object (400, 500, 600) if it has been determined that the detected first gesture is the gesture directed towards the virtual object (400, 500, 600) which is superimposed on the real environment (300) of the vehicle, and if it is determined that the detected second gesture is the gesture assigned to the manipulation of the virtual object, **characterised in that** the second gesture is a gesture directed towards a display unit (700, 900) of the vehicle which is different from the device for superimposing the virtual object (400, 500, 600) on the real environment (300), and **in that** the manipulating of (S700) the virtual object (400, 500, 600) comprises a presentation of the displaced or copied virtual object or a presentation of additional or detailed information regarding an object in the real environment belonging to the virtual object (400, 500, 600) on the display unit (700, 900) of the vehicle which is determined by the second gesture.

2. Method according to claim 1, **characterised in that** the virtual object is superimposed on the real environment of the vehicle by means of a headup display, and **in that** the display unit comprises at least one instrument cluster or a central display unit.

3. Method according to claim 1 or 2, **characterised in that** the virtual object is superimposed on the real environment of the vehicle by means of a projection of the virtual object into the real environment of the vehicle, and **in that** the display unit comprises at least one instrument cluster or a central display unit.

4. Method according to any of claims 1 to 3, **characterised in that** the virtual object is superimposed on the real environment of the vehicle at a position which corresponds to the object present in the real environment and assigned to the virtual object.

5. Method according to any of claims 1 to 4, **characterised in that** the image-based detection process is camera-based and detects a position of an object performing a gesture in three-dimensional space.

6. Device for controlling functions in a vehicle using gestures performed in three-dimensional space in the vehicle, the device comprising facilities designed for executing a method according to any of claims 1 to 5, comprising
- an image-based detection device for detecting the gestures performed in three-dimensional space;
- a device for superimposing a virtual object (400, 500, 600) on a real environment (300) of the vehicle and for displaying the virtual object (400, 500, 600);
- a display unit (700, 900) different from the device for superimposing the virtual object (400, 500, 600) on the real environment (300) for displaying information; and
- a computing unit configured to execute the method by means of suitable computer programme instructions.

7. Computer programme product comprising instructions which cause a device according to claim 6 to execute a method according to any of claims 1 to 5.

## Revendications

1. Procédé de commande de fonctions dans un véhicule automobile à l'aide de gestes réalisés dans l'environnement tridimensionnel dans le véhicule automobile, qui consiste à :
a) déterminer (S100) si un premier geste réalisé dans un espace tridimensionnel est détecté ou non au moyen d'un processus de détection basé sur une image ;
b) déterminer (S200) si le premier geste est un geste qui est orienté ou non vers un objet virtuel (400, 500, 600) chevauchant un environnement réel (300) autour du véhicule,
dans le cas où on détermine que le premier geste a été détecté, l'objet virtuel (400, 500, 600) s'affiche au moyen d'un dispositif du véhicule destiné à faire chevaucher l'objet virtuel et l'environnement réel (300) autour du véhicule ;
c) déterminer (S500) si un second geste réalisé dans un espace tridimensionnel est détecté ou non au moyen du processus de détection basé sur une image, dans le cas où on détermine que le premier geste détecté est le geste qui est orienté vers l'objet virtuel (400, 500, 600) chevauchant l'environnement réel (300) autour du véhicule automobile ;
d) déterminer (S600) si le second geste détecté est ou non un geste associé à une manipulation de l'objet virtuel (400, 500, 600), dans le cas où il est déterminé que le second geste a été détecté ; et
e) manipuler (S700) l'objet virtuel (400, 500, 600), dans le cas où on détermine que le premier geste détecté est le geste qui est orienté vers l'objet virtuel (400, 500, 600) chevauchant l'environnement réel (300) autour du véhicule automobile, et dans le cas où on détermine que le second geste détecté est le geste associé à la manipulation de l'objet virtuel,
**caractérisé en ce que**
le second gestion présente un geste orienté de l'objet virtuel chevauchant l'environnement réel autour du véhicule automobile vers une unité d'affichage (700, 900) du véhicule automobile, différente du dispositif servant à faire chevaucher l'objet virtuel (400, 500, 600) et l'environnement réel et la manipulation (S700) de l'objet virtuel (400, 500, 600) présente une présentation d'un objet virtuel copié ou déplacé ou une représentation d'informations supplémentaires ou détaillées en rapport avec un objet associé à l'objet virtuel (400, 500, 600) dans l'environnement réel sur l'unité d'affichage (700, 900) du véhicule automobile déterminée par le second geste.

2. Procédé selon la revendication 1, **caractérisé en ce que** le chevauchement de l'objet virtuel et de l'environnement réel autour du véhicule automobile est effectué au moyen d'un affichage tête haute et l'unité d'affichage comprend au moins un instrument combiné ou une unité d'affichage centrale.

3. Procédé selon la revendication 1 ou 2, **caractérisé en ce que** le chevauchement de l'objet virtuel sur l'environnement réel autour du véhicule est effectué au moyen d'une projection de l'objet virtuel dans l'environnement réel autour du véhicule et l'unité d'affichage comprend au moins un instrument combiné ou une unité d'affichage centrale.

4. Procédé selon l'une des revendications précédentes 1 à 3, **caractérisé en ce que** l'objet virtuel sur une position qui correspond à l'objet présent dans l'environnement réel, est associé à l'objet virtuel sur lequel l'environnement réel autour du véhicule est chevauché.

5. Procédé selon l'une quelconque des revendications précédentes **caractérisé en ce que** le processus de détection se base sur l'image et détecte une position d'un objet mis en oeuvre par un geste dans un espace tridimensionnel.

6. Dispositif destiné à utiliser des fonctions dans un véhicule à l'aide de gestes mis en oeuvre dans un espace tridimensionnel dans le véhicule, qui présente des dispositifs qui sont conçus pour exécuter un procédé selon l'une des revendications 1 à 5, comprenant :
- un dispositif de détection basé sur l'image pour détecter des gestes mis en oeuvre dans l'espace tridimensionnel ;
un dispositif destiné à faire chevaucher un objet virtuel (400, 500, 600) sur un environnement réel (300) autour du véhicule et ainsi afficher l'objet virtuel (400, 500, 600) ;
une unité d'affichage (700, 900) différente du dispositif destiné à faire chevaucher l'objet virtuel (400, 500, 600) sur l'environnement réel (300) pour présenter des informations ; et
une unité de calcul qui est conçue au moyen d'instructions appropriées de programme informatique pour exécuter le procédé.

7. Produit programme informatique comprenant des instructions de programme informatique qui permettent qu'un dispositif selon la revendication qui exécute un procédé selon l'une des revendications 1 à 5.
